(19) Europäisches Patentamt / European Patent Office / Office européen des brevets

(11) **EP 4 746 551 A1**

(12) **EUROPEAN PATENT APPLICATION**
published in accordance with Art. 153(4) EPC

(43) Date of publication:
**20.05.2026  Bulletin 2026/21**

(21) Application number: **24838883.7**

(22) Date of filing: **12.07.2024**

(51) International Patent Classification (IPC):
**H04W 72/0446** (2023.01)

(52) Cooperative Patent Classification (CPC):
**H04L 27/26; H04W 72/0446**

(86) International application number:
**PCT/CN2024/105140**

(87) International publication number:
**WO 2025/011631 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.07.2023  CN 202310855848**

(71) Applicants:
- **CHINA MOBILE COMMUNICATION CO., LTD
  RESEARCH INSTITUTE
  Beijing 100053 (CN)**
- **CHINA MOBILE COMMUNICATIONS GROUP CO.,
  LTD.
  Beijing 100032 (CN)**

(72) Inventors:
- **LI, Yan
  Beijing 100053 (CN)**
- **ZHANG, Jingwen
  Beijing 100053 (CN)**
- **KE, Ting
  Beijing 100053 (CN)**
- **WANG, Fei
  Beijing 100053 (CN)**
- **HU, Nan
  Beijing 100053 (CN)**
- **DING, Haiyu
  Beijing 100053 (CN)**

(74) Representative: **Novagraaf Technologies
2 rue Sarah Bernhardt
CS90017
92665 Asnières-sur-Seine Cedex (FR)**

(54) **SIGNAL SENDING METHOD, SIGNAL RECEIVING METHOD, APPARATUS, DEVICE AND STORAGE MEDIUM**

(57)    The present application provides a signal sending method, a signal receiving method, an apparatus, a device and a storage S medium. The signal sending method comprises: sending a sensing signal in a flexible slot or uplink slot or downlink slot, wherein the sensing signal uses an extended cyclic prefix, or the time length of the sensing signal is greater than the length of an orthogonal frequency division multiplexing (OFDM) symbol.

```
        ┌─────────┐
        │  Start  │
        └─────────┘
             │
             ▼
┌──────────────────────────────────────┐
│ Transmit a sensing signal in a       │──── 101
│ flexible slot, an uplink slot, or     │
│ a downlink slot; where an Extended    │
│ Cyclic Prefix (ECP) is used in the    │
│ sensing signal, or a time length of   │
│ the sensing signal is greater than a  │
│ length of an Orthogonal Frequency     │
│ Division Multiplexing (OFDM) symbol   │
└──────────────────────────────────────┘
             │
             ▼
        ┌─────────┐
        │   End   │
        └─────────┘
```

**FIG. 1**

EP 4 746 551 A1

**Description**

CROSS-REFERENCE TO RELATED APPLICATION

The present disclosure claims priority to the Chinese Patent Application No. 202310855848.1, filed on July 12, 2023, which is hereby incorporated by reference in its entirety.

TECHNICAL FIELD

The present disclosure relates to the field of communication technologies, and in particular to a signal transmitting method, a signal receiving method, an apparatus, a device and a storage medium.

BACKGROUND

In the base station self-transmitting and self-receiving sensing mode, both the Normal Cyclic Prefix (NCP) and the Extended Cyclic Prefix (ECP) have corresponding maximum sensing distances. For long-distance target detection, multipath exceeding the Cyclic Prefix (CP) will cause Inter-Symbol Interference (ISI) of the sensing signal, and similarly, there will also be Inter-Channel Interference (ICI). There is a conflict between the reception of the sensing signal caused by multipath exceeding the CP and the transmission of the communication signal. Therefore, transmitting a sensing signal based on NCP severely limits the sensing coverage, affects the sensing accuracy, and results in high site deployment costs.

SUMMARY

To solve the problems in the related art, the embodiments of the present application provide a signal transmitting method, a signal receiving method, an apparatus, a device and a storage medium.
The technical solutions of the embodiments of the present application are implemented as follows:
An embodiment of the present application provides a signal transmitting method, applied to a terminal or a network device. The method includes:

> transmitting a sensing signal in a flexible slot, an uplink slot or a downlink slot;
> wherein an Extended Cyclic Prefix (ECP) is used in the sensing signal, or a time length of the sensing signal is greater than a length of an Orthogonal Frequency Division Multiplexing (OFDM) symbol.

In the embodiment of the present application, transmitting the sensing signal in the flexible slot may include:

> transmitting the sensing signal on at least one first symbol; wherein the at least one first symbol occupies at least one second symbol in the flexible slot and/or at least one third symbol in the flexible slot; and
> wherein a number of the at least one second symbol and/or the at least one third symbol occupied by the at least one first symbol is related to at least one of the following parameters:

>> a number of the at least one first symbol;
>> a length of the ECP;
>> the time length of the sensing signal;
>> a time length of the at least one first symbol;
>> a time length of the at least one second symbol; or
>> a time length of the at least one third symbol.

In the embodiment of the present application, transmitting the sensing signal on at least one symbol before at least one flexible symbol in the flexible slot may include:

> transmitting the sensing signal on at least one first symbol; wherein the at least one first symbol occupies the last at least one second symbol before the flexible symbols in the flexible slot and occupies at least one flexible symbol; the at least one flexible symbol is located after the at least one second symbol; and
> wherein a number of the at least one second symbol and/or the at least one flexible symbol occupied by the at least one first symbol is related to at least one of the following parameters:

>> a number of the at least one first symbol;

a length of the ECP;
the time length of the sensing signal;
a time length of the at least one first symbol;
a time length of the at least one second symbol; or
a time length of the at least one flexible symbol.

In the embodiment of the present application,
the number of the at least one second symbol occupied by the at least one first symbol is equal to the number of the at least one first symbol;

a number of the at least one flexible symbol occupied by the at least one first symbol =

[the number of the at least one first symbol * (the time length of the sensing signal - the time length of the at least one second symbol) / the time length of the at least one flexible symbol], where ⌈ ⌉ represents a ceiling operation;

or

a number of the at least one flexible symbol occupied by the at least one first symbol =

[the number of the at least one first symbol * (the length of the ECP - the length of the Normal Cyclic Prefix (NCP)) / the time length of the at least one flexible symbol],

where ⌈ ⌉ represents a ceiling operation.

In the embodiment of the present application, transmitting the sensing signal on at least one symbol after at least one flexible symbol in the flexible slot may include:

transmitting the sensing signal on at least one first symbol; wherein the at least one first symbol occupies at least one second symbol after the at least one flexible symbol in the flexible slot and occupies at least one flexible symbol; the at least one flexible symbol is located before the at least one second symbol; a number of the at least one second symbol and/or the at least one flexible symbol occupied by the at least one first symbol is related to at least one of the following parameters:

a number of the at least one first symbol;
a length of the ECP;
the time length of the sensing signal;
a time length of the at least one first symbol;
a time length of the at least one second symbol;
a time length of the at least one flexible symbol.

In the embodiment of the present application,
the number of the at least one second symbol occupied by the at least one first symbol is equal to the number of the at least one first symbol;

the number of the at least one flexible symbol occupied by the at least one first symbol =

[2 * the number of the at least one first symbol * (the time length of the sensing signal - the time length of the at least one second symbol) / the time length of the at least one flexible symbol], where ⌈ ⌉ represents a ceiling operation;

or the number of the at least one flexible symbol occupied by the at least one first symbol =

[2 * the number of the at least one first symbol * (the length of the ECP - the length of the NCP) / the time length of the at least one flexible symbol], where ⌈ ⌉ represents a ceiling operation.

In the embodiment of the present application, transmitting the sensing signal in the uplink slot or the downlink slot may include:

dividing the uplink slot or the downlink slot into N sub-slots;
transmitting the sensing signal in X sub-slots among the N sub-slots, and transmitting a communication signal on Y sub-slots among the N sub-slots;
wherein the X sub-slots include six symbols, and the Y sub-slots include seven symbols.

In the embodiment of the present application, transmitting the sensing signal in the uplink slot or the downlink slot may include:
indicating a symbol position where the sensing signal is to be transmitted in the uplink slot or the downlink slot in a bitmap form.

In the embodiment of the present application, transmitting the sensing signal in the uplink slot or the downlink slot may include:

transmitting n sensing signals by using m symbols in one said uplink slot or downlink slot;
wherein a time length of the m symbols is greater than a length of the n sensing signals; and
wherein the sensing signal takes a position of a first time as a start time; the position of the first time is a start position of the m symbols, or the first time is any time in the m symbols.

In the embodiment of the present application, the method may further include:

establishing a sensing signal group for continuously transmitted sensing signals among the n sensing signals; and
indicating a position of a start symbol of the sensing signal group to the network device or the terminal.

An embodiment of the present application further provides a signal receiving method, applied to a terminal or a network device. The method includes:

receiving a sensing signal in a flexible slot, an uplink slot or a downlink slot;

wherein an Extended Cyclic Prefix (ECP) is used in the sensing signal, or a time length of the sensing signal is greater than a length of an Orthogonal Frequency Division Multiplexing (OFDM) symbol.

In the embodiment of the present application, receiving the sensing signal in the flexible slot includes:

receiving the sensing signal on at least one first symbol; wherein the at least one first symbol occupies at least one second symbol in the flexible slot and/or at least one third symbol in the flexible slot; and

wherein a number of the at least one second symbol and/or the at least one third symbol occupied by the at least one first symbol is related to at least one of the following parameters:

a number of the at least one first symbol;
a length of the ECP;
the time length of the sensing signal;
a time length of the at least one first symbol;
a time length of the at least one second symbol; or
a time length of the at least one third symbol.

In the embodiment of the present application, receiving the sensing signal in the uplink slot or the downlink slot may include:

receiving the sensing signal in X sub-slots among N sub-slots, and receiving a communication signal in Y sub-slots among the N sub-slots;
wherein the uplink slot or the downlink slot is divided into the N sub-slots; the X sub-slots include six symbols, and the Y sub-slots include seven symbols.

In the embodiment of the present application, receiving the sensing signal in the uplink slot or the downlink slot may include:

receiving n sensing signals on m symbols in one said uplink slot or downlink slot;
wherein a time length of the m symbols is greater than a length of the n sensing signals; and
the sensing signal takes a position of a first time as a start time; the position of the first time is a start position of the m symbols, or the first time is any time in the m symbols.

In the embodiment of the present application, the method may further include:

determining a position of a start symbol of a sensing signal group according to an indication from the network device or the terminal;
wherein the sensing signal group is a group formed by continuously transmitted sensing signals among the n sensing signals.

An embodiment of the present application further provides a first device, including a first communication interface and a first processor;

wherein the first communication interface is configured to transmit a sensing signal in a flexible slot, an uplink slot or a downlink slot; and
wherein an Extended Cyclic Prefix (ECP) is used in the sensing signal, or a time length of the sensing signal is greater than a length of an Orthogonal Frequency Division Multiplexing (OFDM) symbol.

An embodiment of the present application further provides a second device, including a second communication interface and a second processor;

wherein the second communication interface is configured to receive a sensing signal in a flexible slot, an uplink slot or a downlink slot; and
wherein an Extended Cyclic Prefix (ECP) is used in the sensing signal, or a time length of the sensing signal is greater than a length of an Orthogonal Frequency Division Multiplexing (OFDM) symbol.

An embodiment of the present application further provides a first device, including a first processor and a first memory for storing a computer program that is runnable on the processor; wherein the first processor is configured to execute steps of the signal transmitting method described above when running the computer program.

An embodiment of the present application further provides a second device, including a second processor and a second memory for storing a computer program that is runnable on the processor; wherein the second processor is configured to execute steps of the signal receiving method described above when running the computer program.

An embodiment of the present application further provides a storage medium having a computer program stored thereon, where the computer program, when executed by a processor, implements steps of the methods described above.

According to the signal transmitting method, signal receiving method, apparatus, device and storage medium provided in the embodiments of the present application, a sensing signal is transmitted in a flexible slot, an uplink slot or a downlink slot; where an ECP is used in the sensing signal, or the time length of the sensing signal is greater than the time length of an OFDM symbol. The embodiments of the present application use an integrated air interface design in which an ECP is used in the sensing signal or has a time length greater than that of an OFDM symbol while an NCP is still used in the communication signal. This design can reduce the ISI and ICI of the sensing signal, increase the sensing coverage distance, improve the sensing accuracy, and reduce the base station deployment cost.

BRIEF DESCRIPTION OF THE DRAWINGS

FIG. 1 is a schematic flowchart of a signal transmitting method according to an embodiment of the present application.
FIG. 2 is a first schematic diagram of a flexible slot frame structure for transmitting sensing signals according to an embodiment of the present application.
FIG. 3 is a second schematic diagram of a flexible slot frame structure for transmitting sensing signals according to an embodiment of the present application.
FIG. 4 is a first schematic diagram of an uplink slot or downlink slot frame structure for transmitting sensing signals according to an embodiment of the present application.
FIG. 5 is a second schematic diagram of an uplink slot or downlink slot frame structure for transmitting sensing signals according to an embodiment of the present application.
FIG. 6 is a schematic flowchart of a signal receiving method according to an embodiment of the present application.
FIG. 7 is a schematic structural diagram of a signal transmitting apparatus according to an embodiment of the present application.
FIG. 8 is a schematic structural diagram of a signal receiving apparatus according to an embodiment of the present application.
FIG. 9 is a schematic structural diagram of a first device for implementing signal transmitting according to an embodiment of the present application.
FIG. 10 is a schematic structural diagram of a second device for implementing signal receiving according to an embodiment of the present application.

DETAILED DESCRIPTION

The present application is described below with reference to the accompanying drawings and embodiments. It should be understood that the specific embodiments described herein are only used to explain the present application but not to limit the present application. In addition, it should be noted that, for the convenience of description, only parts related to the embodiments of the present application are shown in the accompanying drawings. It should be noted that the embodiments in the present application and the features in the embodiments can be combined with each other without conflict. The present application will be described in detail below with reference to the accompanying drawings and in conjunction with the embodiments.

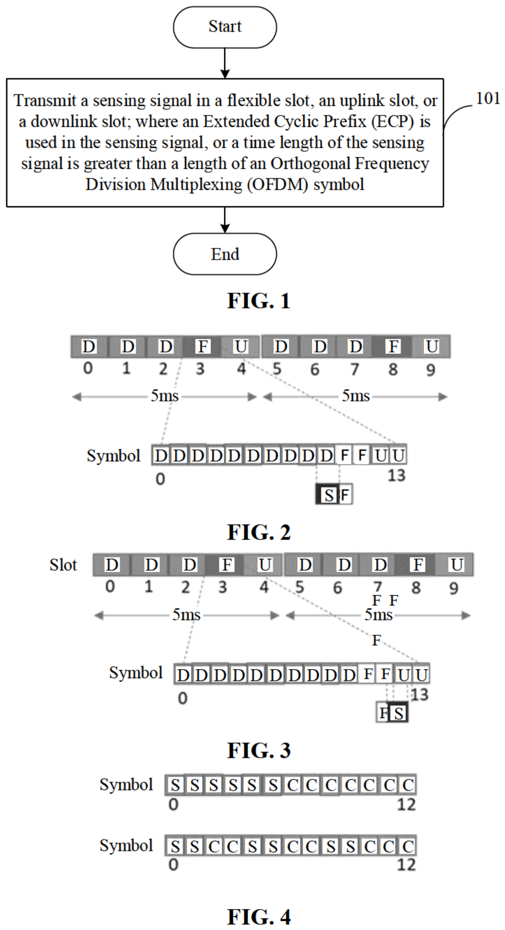

An embodiment of the present application provides a signal transmitting method, as shown in FIG. 1, applied to a terminal or a network device. The method includes the following operations.

At step 101, a sensing signal is transmitted in a flexible slot, an uplink slot, or a downlink slot.

An Extended Cyclic Prefix (ECP) is used in the sensing signal, or a time length of the sensing signal is greater than a length of an Orthogonal Frequency Division Multiplexing (OFDM) symbol.

In practical applications, the terminal may be referred to as a User Equipment (UE), a terminal device or a device, and may also be referred to as a user, which is not limited in the embodiments of the present application. The network device may specifically be a base station, such as a gNB, and the name of the network device is not limited in the embodiments of the present application as long as it implements the corresponding functions.

The flexible slot may refer to: a slot including a uplink (UL) symbol(s) and flexible symbol(s); or, the flexible slot may refer to: a slot including a downlink (DL) symbol(s) and a flexible symbol(s); or, the flexible slot may refer to: a slot including a UL symbol(s), a DL symbol(s), and a flexible symbol(s).

The uplink slot refers to: a slot containing only UL symbol(s); correspondingly, the downlink slot may refer to: a slot containing only DL symbol(s).

In the embodiment of the present application, transmitting the sensing signal in the flexible slot includes:

transmitting the sensing signal on at least one first symbol; the at least one first symbol occupies at least one second symbol in the flexible slot and/or at least one third symbol in the flexible slot;
a number of the at least one second symbol and/or the at least one third symbol occupied by the at least one first symbol is related to at least one of the following parameters:

> a number of the at least one first symbol;
> a length of the ECP;
> the time length of the sensing signal;
> a time length of the at least one first symbol;
> a time length of the at least one second symbol; or
> a time length of the at least one flexible symbol.

In the embodiment of the present application, the at least one first symbol includes: a symbol for transmitting the sensing signal; the second symbol includes: a UL symbol or a DL symbol in the flexible slot; the third symbol includes: a flexible symbol, and the position of the flexible symbol includes a position for uplink-downlink switching.

In the embodiment of the present application, transmitting the sensing signal on at least one symbol before at least one flexible symbol in the flexible slot includes:

> transmitting the sensing signal on at least one first symbol; the at least one first symbol occupies the last at least one second symbol before the flexible symbols in the flexible slot and occupies at least one flexible symbol; the at least one flexible symbol is located after the at least one second symbol; and
> a number of the at least one second symbol and/or the at least one flexible symbol occupied by the at least one first symbol is related to at least one of the following parameters:

> > a number of the at least one first symbol;
> > a length of the ECP;
> > the time length of the sensing signal;
> > a time length of the at least one first symbol;
> > a time length of the at least one second symbol; or
> > a time length of the at least one flexible symbol.

In the embodiment of the present application, the number of the at least one second symbol occupied by the at least one first symbol is equal to the number of the at least one first symbol;

a number of the at least one flexible symbol occupied by the at least one first symbol =

$\lceil$ the number of the at least one first symbol * (the time length of the sensing signal - the time length of the at least one second symbol) / the time length of the at least one flexible symbol $\rceil$, where $\lceil\ \rceil$ represents a ceiling operation;

or

a number of the at least one flexible symbol occupied by the at least one first symbol =

$\lceil$ the number of the at least one first symbol * (the length of the ECP - the length of the Normal Cyclic Prefix (NCP)) / the time length of the at least one flexible symbol $\rceil$,

where $\lceil\ \rceil$ represents a ceiling operation.

In one embodiment, in practical application, the sensing signal may be transmitted on the last one or more DL symbols before the uplink-downlink switching in the flexible slot, where the ECP is used in the sensing signal and the NCP is used in the communication signal. For example, assume that a flexible slot includes multiple symbols, and the multiple symbols are DDDDDDDDDDFFUU, where D represents a DL symbol, U represents a UL symbol, and F represents a flexible symbol, as shown in FIG. 2.

Since the time length of the first symbol(s) for transmitting the sensing signal (represented by "S" in FIG. 2) using the ECP is greater than the time length of the symbol for transmitting the communication signal (using the NCP), the time length of the first symbol(s) is increased by X * (ECP - NCP) compared with the time length of the symbol for transmitting the communication signal, and occupies a part of the flexible symbols (represented by "F" in FIG. 2), where X is the number of the first symbol(s). The number of flexible symbol(s) occupied by the first symbol(s) can be expressed as:

$$\lceil X * (ECP - NCP) / \text{the time length of the flexible symbol(s)} \rceil$$, where $\lceil\ \rceil$ represents a ceiling operation.

In the embodiment of the present application, transmitting the sensing signal on at least one symbol after at least one flexible symbol in the flexible slot may include:

transmitting the sensing signal on at least one first symbol; wherein the at least one first symbol occupies at least one second symbol after the at least one flexible symbol in the flexible slot and occupies at least one flexible symbol; the at least one flexible symbol is located before the at least one second symbol;
a number of the at least one second symbol and/or the at least one flexible symbol occupied by the at least one first symbol is related to at least one of the following parameters:

a number of the at least one first symbol;
a length of the ECP;
the time length of the sensing signal;
a time length of the at least one first symbol;
a time length of the at least one second symbol; or
a time length of the at least one flexible symbol.

In the embodiment of the present application, the number of the at least one second symbol occupied by the at least one first symbol is equal to the number of the at least one first symbol;

the number of the at least one flexible symbol occupied by the at least one first symbol =

$\lceil 2 *$ the number of the at least one first symbol $*$ (the time length of the sensing signal - the time length of the at least one second symbol) / the time length of the at least one flexible symbol $\rceil$, where $\lceil\ \rceil$ represents a ceiling operation;

or the number of the at least one flexible symbol occupied by the at least one first symbol =

$\lceil 2 *$ the number of the at least one first symbol $*$ (the length of the ECP - the length of the NCP) / the time length of the at least one flexible symbol $\rceil$, where $\lceil\ \rceil$ represents a ceiling operation.

In one embodiment, in practical application, the sensing signal may be transmitted on the first one or more UL symbols after the uplink-downlink switching in the flexible slot, where the ECP is used in the sensing signal and the NCP is used in the communication signal. For example, assume that a flexible slot includes multiple symbols, and the multiple symbols are DDDDDDDDDDFFUU, where D represents a DL symbol, U represents a UL symbol, and F represents a flexible symbol, as shown in FIG. 3.

On the one hand, the ECP is used in the sensing signal. Since the time length of the first symbol(s) for transmitting the sensing signal (represented by "S" in FIG. 3) using the ECP is greater than the time length of the symbol for transmitting the communication signal (using the NCP), the first symbol(s) needs to be transmitted earlier by a time length of (the length of the ECP - the length of the NCP) compared with the original NCP frame structure. On the other hand, to prevent excessive time delay of the sensing signal from affecting the transmission of subsequent symbols for transmitting communication signals, the first symbol(s) needs to be transmitted earlier by another time length of (the length of the ECP - the length of the NCP). Therefore, the sensing signal needs to be transmitted earlier by a total time length of 2 * (the length of the ECP - the length of the NCP) and occupies a part of the flexible symbol(s) (represented by "F" in FIG. 3). Therefore, when transmitting X first symbols, the first symbol(s) needs to be transmitted earlier by a time length of 2X * (the length of the ECP - the length of the NCP), and the number of flexible symbol(s) occupied by the first symbol(s) = [2X * (the length of the ECP - the length of the NCP) / the time length of the flexible symbol(s)], where ⌈ ⌉ represents a ceiling operation.

In the embodiment of the present application, transmitting the sensing signal in the uplink slot or the downlink slot includes:

dividing the uplink slot or the downlink slot into N sub-slots;
transmitting the sensing signal in X sub-slots among the N sub-slots, and transmitting a communication signal in Y sub-slots among the N sub-slots;
where the X sub-slots include six symbols, and the Y sub-slots include seven symbols; where N, X, and Y are all integers greater than or equal to 1.

It can be seen that for the NCP frame structure, one slot has 14 symbols; for the ECP frame structure, one slot has 12 symbols. In one embodiment of the present application, one uplink slot or one downlink slot is divided into N sub-slots, where the sensing signal is transmitted in the ECP mode in X sub-slots, and the communication signal is transmitted in the NCP mode in Y sub-slots. The X sub-slots for transmitting ECP sensing signals include a total of six symbols; the Y sub-slots for transmitting NCP communication signals include a total of seven symbols; therefore, one slot contains 13 symbols. Within every 0.5 milliseconds (ms), the CP length of the first OFDM symbol (also understood as a communication OFDM symbol) for transmitting the communication signal is 5.21 microseconds ($\mu$s), the CP length of the 2nd to 7th OFDM symbols for transmitting the communication signal is 4.69 $\mu$s, and the seven symbols for transmitting communication signals may be discontinuous. In practical application, as shown in FIG. 4, the symbols represented by "S" are symbols for transmitting the sensing signal, and the symbols represented by "C" are symbols for transmitting the communication signal. FIG. 4 provides two implementation modes of the frame structure, and in the second mode, the seven symbols for transmitting the communication signal are discontinuous.

In the embodiment of the present application, transmitting the sensing signal in the uplink slot or the downlink slot includes:
indicating the position of symbol(s) where the sensing signal is to be transmitted in the uplink slot or the downlink slot in the form of a bitmap.

In the embodiment of the present application, in practical application, the network device may indicate to the terminal the position of the symbol(s) where the sensing signal is to be transmitted in the uplink slot or the downlink slot, or the terminal may indicate to the network device the position of the symbol(s) where the sensing signal is to be transmitted in the uplink slot or the downlink slot. The position of the symbol(s) is used by the terminal or the network device to determine the time position of the symbol(s) of the communication signal for frame structure alignment. For example, the indication may be performed in the form of a 13-bit bitmap, such as 0000001111111, where 0 indicates transmitting a sensing signal with ECP and 1 indicates transmitting a communication signal with NCP.

In one embodiment, for the network side, it may indicate to the terminal that the sensing signal is configured to be transmitted in the uplink slot or the downlink slot through a Media Access Control Control Element (MAC CE) or Downlink Control Information (DCI).

In one embodiment of the present application, transmitting the sensing signal in the uplink slot or the downlink slot includes:

transmitting n sensing signals by using m symbols in one uplink slot or downlink slot;
where a time length of the m symbols is greater than a length of the n sensing signals;
the sensing signal takes a position of a first time as the start time; the position of the first time is a start position of the m symbols, or the first time is any time in the m symbols; where m and n are both integers greater than or equal to 1.

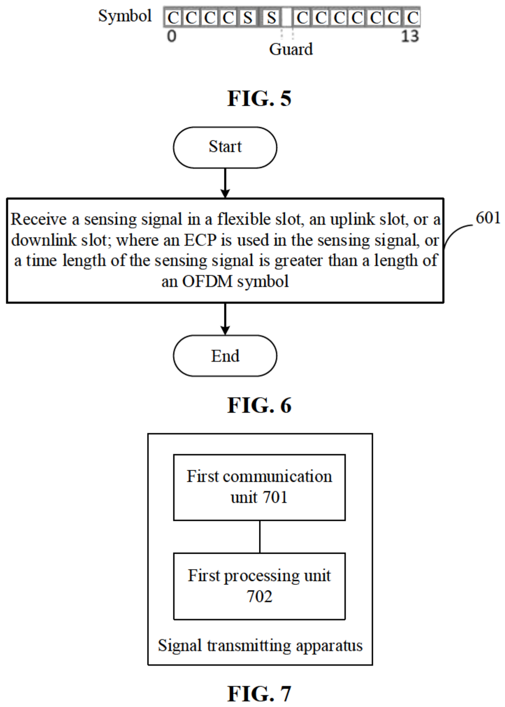

Here, in practical application, considering that the transmission of sensing signals may not require six symbols-for example, there are cases where only 1-2 symbols are needed for transmitting sensing signals-m symbols (such as communication OFDM symbols) can be reserved for transmitting n sensing signals using ECP, provided that the time length of the m symbols is greater than the length of the n sensing signals using ECP. The position of the first time may include a start position of the symbol(s) for transmitting communication signals, and the remaining time domain positions in the m symbols (the time domain positions not occupied by the sensing signal) can be used as a guard interval, as shown in FIG. 5. The guard interval is used to reduce the interference of the sensing signal on the communication signal.

In the embodiment of the present application, the method further includes:

establishing a sensing signal group for continuously transmitted sensing signals among the n sensing signals; and
indicating a position of a start symbol of the sensing signal group to the network device or the terminal.

It should be noted that considering that sensing signal is transmitted periodically or semi-persistently, all configurations in the embodiments of the present application are applicable to the transmission opportunity of each period.

An embodiment of the present application further provides a signal receiving method, as shown in FIG. 6, applied to a terminal or a network device. The method includes the following operations.

At step 601, a sensing signal is received in a flexible slot, an uplink slot, or a downlink slot; where an ECP is used in the sensing signal, or a time length of the sensing signal is greater than a length of an OFDM symbol.

In the embodiment of the present application, receiving the sensing signal in the flexible slot includes:

receiving the sensing signal on at least one first symbol; the at least one first symbol occupies at least one second symbol in the flexible slot and/or at least one third symbol in the flexible slot;
a number of the at least one second symbol and/or the at least one third symbol occupied by the at least one first symbol is related to at least one of the following parameters:

a number of the at least one first symbol;
a length of the ECP;
the time length of the sensing signal;
a time length of the at least one first symbol;
a time length of the at least one second symbol; or
a time length of the at least one third symbol.

In the embodiment of the present application, receiving the sensing signal in the uplink slot or the downlink slot includes:

receiving the sensing signal in X sub-slots among N sub-slots, and receiving a communication signal on Y sub-slots among the N sub-slots;
where the uplink slot or the downlink slot is divided into the N sub-slots; the X sub-slots include six symbols, and the Y sub-slots include seven symbols; where N, X, and Y are all integers greater than or equal to 1.

In the embodiment of the present application, receiving the sensing signal in the uplink slot or the downlink slot includes:

receiving n sensing signals on m symbols in one said uplink slot or downlink slot;
where a time length of the m symbols is greater than a length of the n sensing signals; and
the sensing signal takes a position of a first time as a start time; the position of the first time is a start position of the m symbols, or the first time is any time in the m symbols; where m and n are both integers greater than or equal to 1.

In the embodiment of the present application, the method further includes:

determining a position of a start symbol of a sensing signal group according to an indication from the network device or the terminal;
Where the sensing signal group is a group formed by continuously transmitted sensing signals among the n sensing signals.

To implement the signal transmitting method of the embodiments of the present application, an embodiment of the present application further provides a signal transmitting apparatus, as shown in FIG. 7. The apparatus is disposed on a terminal or a network device. The apparatus includes a first communication unit 701.

The first communication unit 701 is configured to transmit a sensing signal in a flexible slot, an uplink slot, or a downlink slot; where an ECP is used in the sensing signal, or a time length of the sensing signal is greater than a length of an OFDM symbol.

In the embodiment of the present application, the first communication unit 701 transmitting the sensing signal in the flexible slot includes:

transmitting the sensing signal on at least one first symbol; wherein the at least one first symbol occupies at least one second symbol in the flexible slot and/or at least one third symbol in the flexible slot; and
wherein a number of the at least one second symbol and/or the at least one third symbol occupied by the at least one first symbol is related to at least one of the following parameters:

a number of the at least one first symbol;
a length of the ECP;
the time length of the sensing signal;
a time length of the at least one first symbol;
a time length of the at least one second symbol; or
a time length of the at least one third symbol.

In the embodiment of the present application, the first communication unit 701 is configured to:

transmit the sensing signal on at least one first symbol; wherein the at least one first symbol occupies the last at least one second symbol before the at least one flexible symbol in the flexible slot and occupies at least one flexible symbol; the at least one flexible symbol is located after the at least one second symbol; and
a number of the at least one second symbol and/or the at least one flexible symbol occupied by the at least one first symbol is related to at least one of the following parameters:

a number of the at least one first symbol;
a length of the ECP;
the time length of the sensing signal;
a time length of the at least one first symbol;
a time length of the at least one second symbol; or
a time length of the at least one flexible symbol.

In the embodiment of the present application,
the number of the at least one second symbol occupied by the at least first symbol is equal to the number of the at least one first symbol;

a number of the at least one flexible symbol occupied by the at least one first symbol =

⌈the number of the at least one first symbol * (the time length of the sensing signal - the time length of the at least one second symbol) / the time length of the at least one flexible symbol⌉, where ⌈ ⌉ represents a ceiling operation;

or

a number of the at least one flexible symbol occupied by the at least one first symbol =

⌈the number of the at least one first symbol * (the length of the ECP - the length of the Normal Cyclic Prefix (NCP)) / the time length of the at least one flexible symbol⌉,

where ⌈ ⌉ represents a ceiling operation.
In the embodiment of the present application, the first communication unit 701 is configured to:

transmit the sensing signal on at least one first symbol; wherein the at least one first symbol occupies at least one second symbol after the at least one flexible symbol in the flexible slot and occupies at least one flexible symbol; the at least one flexible symbol is located before the at least one second symbol;
a number of the at least one second symbol and/or the at least one flexible symbol occupied by the at least one first symbol is related to at least one of the following parameters:

a number of the at least one first symbol;
a length of the ECP;
the time length of the sensing signal;
a time length of the at least one first symbol;

a time length of the at least one second symbol; or
a time length of the at least one flexible symbol.

In the embodiment of the present application,
the number of the at least one second symbol occupied by the at least one first symbol is equal to the number of the at least one first symbol;

the number of the at least one flexible symbol occupied by the at least one first symbol =

⌈2 * the number of the at least one first symbol * (the time length of the sensing signal - the time length of the at least one second symbol) / the time length of the at least one flexible symbol⌉, where ⌈ ⌉ represents a ceiling operation;

or the number of the at least one flexible symbol occupied by the at least one first symbol =

⌈2 * the number of the at least one first symbol * (the length of the ECP - the length of the NCP) / the time length of the at least one flexible symbol⌉, where ⌈ ⌉ represents a ceiling operation.

In the embodiment of the present application, the first communication unit 701 is configured to:

divide the uplink slot or the downlink slot into N sub-slots;
transmit the sensing signal in X sub-slots among the N sub-slots, and transmit a communication signal on Y sub-slots among the N sub-slots;
where the X sub-slots include six symbols, and the Y sub-slots include seven symbols; where N, X, and Y are all integers greater than or equal to 1.

In the embodiment of the present application, the first communication unit 701 is configured to:
indicate a symbol position where the sensing signal is to be transmitted in the uplink slot or the downlink slot in a bitmap form.

In the embodiment of the present application, the first communication unit 701 is configured to:

transmit n sensing signals by using m symbols in one uplink slot or downlink slot;
where a time length of the m symbols is greater than a length of the n sensing signals;
the sensing signal takes a position of a first time as the start time; the position of the first time is the start position of the m symbols, or the first time is any time in the m symbols; where m and n are both integers greater than or equal to 1.

In the embodiment of the present application, the apparatus further includes:

a first processing unit 702 configured to establish a sensing signal group for continuously transmitted sensing signals among the n sensing signals;
the first communication unit 701 is configured to indicate a position of a start symbol of the sensing signal group to the network device or the terminal.

In practical application, the first communication unit 701 may be implemented by a communication interface in the signal transmitting apparatus; the first processing unit 702 may be implemented by a processor in the signal transmitting apparatus.
It should be noted that when the signal transmitting apparatus provided in the above embodiment transmits a signal, the division of the program modules is only used as an example for illustration. In practical application, the above processing can be allocated to different program modules according to needs, that is, the internal structure of the apparatus is divided into different program modules to complete all or part of the processing described above. In addition, the signal transmitting apparatus provided in the above embodiment and the signal transmitting method embodiment belong to the same concept, and the specific implementation process is detailed in the method embodiment, which is not repeated here.

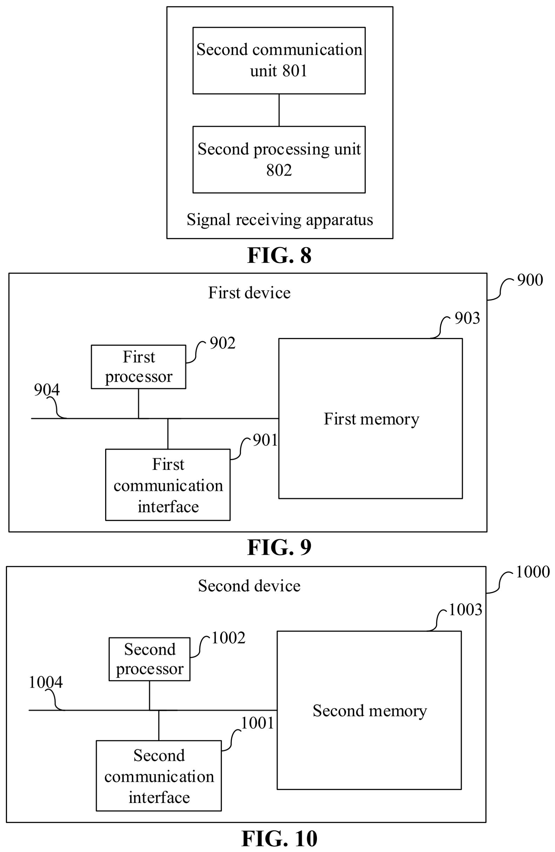

To implement the signal receiving method of the embodiments of the present application, an embodiment of the present application further provides a signal receiving apparatus, as shown in FIG. 8, disposed on a terminal or a network device. The apparatus includes a second communication unit 801.

The second communication unit 801 is configured to receive a sensing signal in a flexible slot, an uplink slot, or a downlink slot;

where an ECP is used in the sensing signal, or a time length of the sensing signal is greater than a length of an OFDM symbol.

In the embodiment of the present application, the second communication unit 801 is configured to:

[receive the sensing signal on at least one first symbol; the at least one first symbol occupies at least one second symbol in the flexible slot and/or at least one third symbol in the flexible slot;

a number of the at least one second symbol and/or the at least one third symbol occupied by the at least one first symbol is related to at least one of the following parameters:

a number of the at least one first symbol;
a length of the ECP;
the time length of the sensing signal;
a time length of the at least one first symbol;
a time length of the at least one second symbol; or
a time length of the at least one third symbol.

In the embodiment of the present application, the second communication unit 801 is configured to:

receive the sensing signal in X sub-slots among N sub-slots, and receive a communication signal on Y sub-slots among the N sub-slots;

where the uplink slot or the downlink slot is divided into the N sub-slots; the X sub-slots include six symbols, and the Y sub-slots include seven symbols; where N, X, and Y are all integers greater than or equal to 1.

In the embodiment of the present application, the second communication unit 801 is configured to:

receive n sensing signals on m symbols in one uplink slot or downlink slot;

where a time length of the m symbols is greater than a length of the n sensing signals; and

the sensing signal takes a position of a first time as a start time; the position of the first time is a start position of the m symbols, or the first time is any time in the m symbols, where m and n are both integers greater than or equal to 1.

In the embodiment of the present application, the apparatus further includes: a second processing unit 802 configured to determine a position of a start symbol of a sensing signal group according to an indication from the network device or the terminal;

where the sensing signal group is a group formed by continuously transmitted sensing signals among the n sensing signals.

In practical application, the second communication unit 801 may be implemented by a communication interface in the signal receiving apparatus; the second processing unit 802 may be implemented by a processor in the signal receiving apparatus.

It should be noted that when the signal receiving apparatus provided in the above embodiment receives a signal, the division of the program modules is only used as an example for illustration. In practical application, the above processing can be allocated to different program modules according to needs, that is, the internal structure of the apparatus is divided into different program modules to complete all or part of the processing described above. In addition, the signal receiving apparatus provided in the above embodiment and the signal receiving method embodiment belong to the same concept, and the specific implementation process is detailed in the method embodiment, which is not repeated here.

Based on the hardware implementation of the aforementioned program modules and to realize the signal transmitting method according to the embodiments of the present application, an embodiment of the present application further provides a first device, which may include a terminal or a network device. As shown in FIG. 9, the first device 900 includes a first communication interface 901, a first processor 902 and a first memory 903.

The first communication interface 901 is capable of exchanging information with a second device.

The first processor 902 is connected to the first communication interface 901 to enable information exchange with the second device, and is configured to execute the methods provided by one or more technical solutions on the terminal or network device side when running a computer program.

The first memory 903 has a computer program stored thereon.

Specifically, the first communication interface 901 is configured to: transmit a sensing signal in a flexible slot, an uplink slot, or a downlink slot;

where an Extended Cyclic Prefix (ECP) is used in the sensing signal, or a time length of the sensing signal is greater than a length of an Orthogonal Frequency Division Multiplexing (OFDM) symbol.

In the embodiment of the present application, the first communication interface 901 is configured to:

transmit the sensing signal on at least one first symbol; the at least one first symbol occupies at least one second symbol in the flexible slot and/or at least one third symbol in the flexible slot;

a number of the at least one second symbol and/or the at least one third symbol occupied by the at least one first symbol is related to at least one of the following parameters:

a number of the at least one first symbol;
a length of the ECP;
the time length of the sensing signal;
a time length of the at least one first symbol;
a time length of the at least one second symbol; or
a time length of the at least one third symbol.

In the embodiment of the present application, the first communication interface 901 is configured to:

transmit the sensing signal on at least one first symbol; the at least one first symbol occupies the last at least one second symbol before the at least one flexible symbol in the flexible slot and occupies at least one flexible symbol; the at least one flexible symbol is located after the at least one second symbol;

the number of the at least one second symbol and/or the at least one flexible symbol occupied by the at least one first symbol is related to at least one of the following parameters:

a number of the at least one first symbol;
a length of the ECP;
the time length of the sensing signal;
a time length of the at least one first symbol;
a time length of the at least one second symbol; or
a time length of the at least one flexible symbol.

In the embodiment of the present application,

the number of the at least one second symbol occupied by the at least one first symbol is equal to the number of the at least one first symbol;

the number of the at least one flexible symbol occupied by the at least one first

symbol =

[the number of the at least one first symbol * (the time length of the sensing

signal - the time length of the at least one second symbol) / the time length of the at least

one flexible symbol], where [ ] represents a ceiling operation;

or the number of the at least one flexible symbol occupied by the at least one first symbol =

[the number of the at least one first symbol * (the length of the ECP - the length of the Normal Cyclic Prefix (NCP)) / the time length of the at least one flexible symbol],

where ⌈ ⌉represents a ceiling operation.

In the embodiment of the present application, the first communication interface 901 is configured to:

transmit the sensing signal on at least one first symbol; the at least one first symbol occupies the last at least one second symbol before the flexible symbols in the flexible slot and occupies at least one flexible symbol; the at least one flexible symbol is located after the at least one second symbol;
the number of the at least one second symbol and/or the at least one flexible symbol occupied by the at least one first symbol is related to at least one of the following parameters:

a number of the at least one first symbol;
a length of the ECP;
the time length of the sensing signal;
a time length of the at least one first symbol;
a time length of the at least one second symbol; or
a time length of the at least one flexible symbol.

In the embodiment of the present application,
the number of the at least one second symbol occupied by the at least one first symbol is equal to the number of the at least one first symbol;

the number of the at least one flexible symbol occupied by the at least one first symbol =

[2 * the number of the at least one first symbol * (the time length of the sensing signal - the time length of the at least one second symbol) / the time length of the at least one flexible symbol], where [ ] represents a ceiling operation;

or the number of the at least one flexible symbol occupied by the at least one first symbol =

[2 * the number of the at least one first symbol * (the length of the ECP - the length of the NCP) / the time length of the at least one flexible symbol], where [ ] represents a ceiling operation.

In the embodiment of the present application, the first communication interface 901 is configured to:

divide the uplink slot or the downlink slot into N sub-slots;
transmit the sensing signal in X sub-slots among the N sub-slots, and transmit a communication signal on Y sub-slots among the N sub-slots;
where the X sub-slots include six symbols, and the Y sub-slots include seven symbols; where N, X, and Y are all integers greater than or equal to 1.

In the embodiment of the present application, the first communication interface 901 is configured to:

indicate a symbol position where the sensing signal is to be transmitted in the uplink slot or the downlink slot in the form of a bitmap.

In the embodiment of the present application, the first communication interface 901 is configured to:

transmit n sensing signals by using m symbols in one uplink slot or downlink slot;
where the time length of the m symbols is greater than the length of the n sensing signals; and
the sensing signal takes a position of a first time as the start time; the position of the first time is a start position of the m symbols, or the first time is any time in the m symbols; where m and n are both integers greater than or equal to 1.

In the embodiment of the present application, the terminal or network device further includes a first processor 902 and a first communication interface 901.

The first processor 902 is configured to establish a sensing signal group for continuously transmitted sensing signals among the n sensing signals.

The first communication interface 901 is configured to indicate a position of a start symbol of the sensing signal group to the network device or the terminal.

It should be noted that the specific processing procedures of the first communication interface 901 and the first processor 902 can be understood with reference to the aforementioned methods, and are not repeated here.

Certainly, in practical applications, the various components in the first device 900 are coupled together via a bus system 904. It can be understood that the bus system 904 is used to implement connection and communication between these components. In addition to a data bus, the bus system 904 further includes a power bus, a control bus, and a status signal bus. However, for the sake of clear description, various buses are marked as the bus system 904 in FIG. 9.

The first memory 903 in the embodiment of the present application is used to store various types of data to support the operation of the first device 900. Examples of such data include any computer program for running on the first device 900.

The methods disclosed in the embodiments of the present application can be applied to or implemented by the first processor 902. The first processor 902 may be an integrated circuit chip with signal processing capabilities. During implementation, the steps of the aforementioned methods can be completed by integrated logic circuits of hardware in the first processor 902 or instructions in the form of software. The aforementioned first processor 902 may be a general-purpose processor, a Digital Signal Processor (DSP), another programmable logic device, discrete gate or transistor logic devices, or discrete hardware components. The first processor 902 can implement or execute the various methods, steps, and logical block diagrams disclosed in the embodiments of the present application. A general-purpose processor may be a microprocessor or any conventional processor, etc. The steps of the methods disclosed in combination with the embodiments of the present application can be directly embodied as executed by a hardware decoding processor, or executed by a combination of hardware and software modules in the decoding processor. The software modules may be located in a storage medium, which is located in the first memory 903. The first processor 902 reads information in the first memory 903 and completes the steps of the aforementioned methods in combination with its hardware.

In an exemplary embodiment, the first device 900 can be implemented by one or more Application Specific Integrated Circuits (ASICs), DSPs, Programmable Logic Devices (PLDs), Complex Programmable Logic Devices (CPLDs), Field-Programmable Gate Arrays (FPGAs), general-purpose processors, controllers, Micro Controller Units (MCUs), microprocessors, or other electronic components to execute the aforementioned methods.

Based on the hardware implementation of the aforementioned program modules and to realize the signal receiving method according to the embodiments of the present application, an embodiment of the present application further provides a second device, which may include a terminal or a network device. As shown in FIG. 10, the second device 1000 includes: a second communication interface 1001, a second processor 1002 and a second memory 1003.

The second communication interface 1001 is capable of exchanging information with the first device.

The second processor 1002 is connected to the second communication interface 1001 to enable information exchange with the first device, and is configured to execute the methods provided by one or more technical solutions on the terminal or network device side when running a computer program;

The second memory 1003 has the computer program stored thereon.

Specifically, the second communication interface 1001 is configured to receive a sensing signal in a flexible slot, an uplink slot, or a downlink slot;
where an ECP is used in the sensing signal, or a time length of the sensing signal is greater than a length of an OFDM symbol.

In the embodiment of the present application, the second communication interface 1001 is configured to:

receive the sensing signal on at least one first symbol; the at least one first symbol occupies at least one second symbol in the flexible slot and/or at least one third symbol in the flexible slot;
a number of the at least one second symbol and/or the at least one third symbol occupied by the at least one first symbol is related to at least one of the following parameters:

a number of the at least one first symbol;
a length of the ECP;
the time length of the sensing signal;
a time length of the at least one first symbol;
a time length of the at least one second symbol; or
a time length of the at least one third symbol.

In the embodiment of the present application, the second communication interface 1001 is configured to:

receive the sensing signal in X sub-slots among N sub-slots, and receive a communication signal in Y sub-slots among the N sub-slots;
where the uplink slot or the downlink slot is divided into the N sub-slots; the X sub-slots include six symbols, and the Y sub-slots include seven symbols; where N, X, and Y are all integers greater than or equal to 1.

In the embodiment of the present application, the second communication interface 1001 is configured to:

receive n sensing signals on m symbols in one uplink slot or downlink slot;
where a time length of the m symbols is greater than a length of the n sensing signals;
the sensing signal takes a position of a first time as the start time; the position of the first time is a start position of the m symbols, or the first time is any time in the m symbols; where m and n are both integers greater than or equal to 1.

In the embodiment of the present application, the terminal or network device further includes: a second processor 1002, configured to determine a position of a start symbol of a sensing signal group according to an indication from the network device or the terminal;
where the sensing signal group is a group formed by continuously transmitted sensing signals among the n sensing signals.

It should be noted that the specific processing procedures of the second communication interface 1001 and the second processor 1002 can be understood with reference to the aforementioned methods, and are not repeated here.

Certainly, in practical applications, the various components in the second device 1000 are coupled together via a bus system 1004. It can be understood that the bus system 1004 is used to implement connection and communication between these components. In addition to a data bus, the bus system 1004 further includes a power bus, a control bus, and a status signal bus. However, for the sake of clear description, various buses are marked as the bus system 1004 in FIG. 10.

The second memory 1003 in the embodiment of the present application is used to store various types of data to support the operation of the second device 1000. Examples of such data include any computer program for running on the second device 1000.

The methods disclosed in the embodiments of the present application can be applied to or implemented by the second processor 1002. The second processor 1002 may be an integrated circuit chip with signal processing capabilities. During implementation, the steps of the aforementioned methods can be completed by integrated logic circuits of hardware in the second processor 1002 or instructions in the form of software. The aforementioned second processor 1002 may be a general-purpose processor, a DSP, another programmable logic device, discrete gate or transistor logic devices, or discrete hardware components. The second processor 1002 can implement or execute the various methods, steps, and logical block diagrams disclosed in the embodiments of the present application. A general-purpose processor may be a microprocessor or any conventional processor, etc. The steps of the methods disclosed in combination with the embodiments of the present application can be directly embodied as executed by a hardware decoding processor, or executed by a combination of hardware and software modules in the decoding processor. The software modules may be located in a storage medium, which is located in the second memory 1003. The second processor 1002 reads information in the second memory 1003 and completes the steps of the aforementioned methods in combination with its hardware.

In an exemplary embodiment, the second device 1000 can be implemented by one or more Application Specific Integrated Circuits (ASICs), Digital Signal Processors (DSPs), Programmable Logic Devices (PLDs), Complex Programmable Logic Devices (CPLDs), Field-Programmable Gate Arrays (FPGAs), general-purpose processors, controllers, Micro Controller Units (MCUs), microprocessors, or other electronic components to execute the aforementioned methods.

When the first device 900 includes a terminal, the second device 1000 includes a network device or another terminal; when the first device 900 includes a network device, the second device 1000 includes a terminal or another network device.

In an exemplary embodiment, the embodiment of the present application further provides a storage medium, namely a computer storage medium, specifically a computer-readable storage medium, such as the first memory 903 storing a computer program. The aforementioned computer program can be executed by the first processor 902 of the first device 900 to complete the steps of the aforementioned methods on the terminal or network device side. The computer-readable storage medium may be a Ferroelectric Random-Access Memory (FRAM), a Read-Only Memory (ROM), a Programmable Read-Only Memory (PROM), an Erasable Programmable Read-Only Memory (EPROM), an Electrically Erasable Programmable Read-Only Memory (EEPROM), a Flash Memory, a magnetic surface memory, an optical disc, a Compact Disc Read-Only Memory (CD-ROM), or other storage devices.

It should be noted that terms such as "first" and "second" are used to distinguish similar objects, and are not necessarily used to describe a specific order or sequence.

In addition, the technical solutions recorded in the embodiments of the present application can be combined arbitrarily on the premise of no conflict.

The above descriptions are merely preferred embodiments of the present application, and are not intended to limit the protection scope of the present application.

**Claims**

1. A signal transmitting method, applied to a terminal or a network device, the method comprising:

   transmitting a sensing signal in a flexible slot, an uplink slot or a downlink slot;
   wherein an Extended Cyclic Prefix (ECP) is used in the sensing signal, or a time length of the sensing signal is greater than a length of an Orthogonal Frequency Division Multiplexing (OFDM) symbol.

2. The method according to claim 1, wherein transmitting the sensing signal in the flexible slot comprises:

   transmitting the sensing signal on at least one first symbol;
   wherein the at least one first symbol occupies at least one second symbol in the flexible slot and/or at least one third symbol in the flexible slot; and
   wherein a number of the at least one second symbol and/or the at least one third symbol occupied by the at least one first symbol is related to at least one of the following parameters:

   a number of the at least one first symbol;
   a length of the ECP;
   the time length of the sensing signal;
   a time length of the at least one first symbol;
   a time length of the at least one second symbol; or
   a time length of the at least one third symbol.

3. The method according to claim 1, wherein transmitting the sensing signal on at least one symbol before at least one flexible symbol in the flexible slot comprises:

   transmitting the sensing signal on at least one first symbol;
   wherein the at least one first symbol occupies the last at least one second symbol before the at least one flexible symbol in the flexible slot and occupies at least one flexible symbol; the at least one flexible symbol is located after the at least one second symbol; and
   wherein a number of the at least one second symbol and/or the at least one flexible symbol occupied by the at least one first symbol is related to at least one of the following parameters:

   a number of the at least one first symbol;
   a length of the ECP;
   the time length of the sensing signal;
   a time length of the at least one first symbol;
   a time length of the at least one second symbol; or
   a time length of the at least one flexible symbol.

4. The method according to claim 3, wherein:
   the number of the at least one second symbol occupied by the at least first symbol is equal to the number of the at least one first symbol;

a number of the at least one flexible symbol occupied by the at least one first symbol = [the number of the at least one first symbol * (the time length of the sensing signal - the time length of the at least one second symbol) / the time length of the at least one flexible symbol],

where ⌈ ⌉ represents a ceiling operation; or

a number of the at least one flexible symbol occupied by the at least one first symbol = [the number of the at least one first symbol * (the length of the ECP - the length of the Normal Cyclic Prefix (NCP)) / the time length of the at least one flexible symbol], where ⌈ ⌉ represents a ceiling operation.

5. The method according to claim 1, wherein transmitting the sensing signal on at least one symbol after at least one flexible symbol in the flexible slot comprises:
transmitting the sensing signal on at least one first symbol; wherein the at least one first symbol occupies at least one second symbol after the at least one flexible symbol in the flexible slot and occupies at least one flexible symbol; the at least one flexible symbol is located before the at least one second symbol; a number of the at least one second symbol and/or the at least one flexible symbol occupied by the at least one first symbol is related to at least one of the following parameters:

a number of the at least one first symbol;
a length of the ECP;
the time length of the sensing signal;
a time length of the at least one first symbol;
a time length of the at least one second symbol; or
a time length of the at least one flexible symbol.

6. The method according to claim 5, wherein:
the number of the at least one second symbol occupied by the at least one first symbol is equal to the number of the at least one first symbol;

the number of the at least one flexible symbol occupied by the at least one first symbol = [2 * the number of the at least one first symbol * (the time length of the sensing signal - the time length of the at least one second symbol) / the time length of the at least one flexible symbol], where ⌈ ⌉ represents a ceiling operation; or the number of the at least one flexible symbol occupied by the at least one first symbol = [2 * the number of the at least one first symbol * (the length of the ECP - the length of the NCP) / the time length of the at least one flexible symbol],

where ⌈ ⌉ represents a ceiling operation.

7. The method according to claim 1, wherein transmitting the sensing signal in the uplink slot or the downlink slot comprises:

dividing the uplink slot or the downlink slot into N sub-slots;
transmitting the sensing signal in X sub-slots among the N sub-slots; and
transmitting a communication signal on Y sub-slots among the N sub-slots;
wherein the X sub-slots include six symbols, and the Y sub-slots include seven symbols.

8. The method according to claim 1, wherein transmitting the sensing signal in the uplink slot or the downlink slot comprises:

indicating a symbol position where the sensing signal is to be transmitted in the uplink slot or the downlink slot in a bitmap form.

9. The method according to claim 1, wherein transmitting the sensing signal in the uplink slot or the downlink slot comprises:

transmitting n sensing signals by using m symbols in one said uplink slot or downlink slot;
wherein a time length of the m symbols is greater than a length of the n sensing signals;
and
wherein the sensing signal takes a position of a first time as a start time; the position of the first time is a start position of the m symbols, or the first time is any time in the m symbols.

10. The method according to claim 9, further comprising:

establishing a sensing signal group for continuously transmitted sensing signals among the n sensing signals;
and
indicating a position of a start symbol of the sensing signal group to the network device or the terminal.

11. A signal receiving method, applied to a terminal or a network device, the method comprising: receiving a sensing signal in a flexible slot, an uplink slot or a downlink slot;
wherein an Extended Cyclic Prefix (ECP) is used in the sensing signal, or a time length of the sensing signal is greater than a length of an Orthogonal Frequency Division Multiplexing (OFDM) symbol.

12. The method according to claim 11, wherein receiving the sensing signal in the flexible slot comprises:

receiving the sensing signal on at least one first symbol; wherein the at least one first symbol occupies at least one second symbol in the flexible slot and/or at least one third symbol in the flexible slot; and
wherein a number of the at least one second symbol and/or the at least one third symbol occupied by the at least one first symbol is related to at least one of the following parameters:

a number of the at least one first symbol;
a length of the ECP;
the time length of the sensing signal;
a time length of the at least one first symbol;
a time length of the at least one second symbol; or
a time length of the at least one third symbol.

13. The method according to claim 11, wherein receiving the sensing signal in the uplink slot or the downlink slot comprises:

receiving the sensing signal in X sub-slots among N sub-slots, and receiving a communication signal in Y sub-slots among the N sub-slots;
wherein the uplink slot or the downlink slot is divided into the N sub-slots; the X sub-slots include six symbols, and the Y sub-slots include seven symbols.

14. The method according to claim 11, wherein receiving the sensing signal in the uplink slot or the downlink slot comprises:

receiving n sensing signals on m symbols in one said uplink slot or downlink slot;
wherein a time length of the m symbols is greater than a length of the n sensing signals;
and
the sensing signal takes a position of a first time as a start time; the position of the first time is a start position of the m symbols, or the first time is any time in the m symbols.

15. The method according to claim 14, further comprising:

determining a position of a start symbol of a sensing signal group according to an indication from the network device or the terminal;

wherein the sensing signal group is a group formed by continuously transmitted sensing signals among the n sensing signals.

16. A first device, comprising a first communication interface and a first processor;

    wherein the first communication interface is configured to transmit a sensing signal in a flexible slot, an uplink slot or a downlink slot; and
    wherein an Extended Cyclic Prefix (ECP) is used in the sensing signal, or a time length of the sensing signal is greater than a length of an Orthogonal Frequency Division Multiplexing (OFDM) symbol.

17. A second device, comprising a second communication interface and a second processor;

    wherein the second communication interface is configured to receive a sensing signal in a flexible slot, an uplink slot or a downlink slot; and
    wherein an Extended Cyclic Prefix (ECP) is used in the sensing signal, or a time length of the sensing signal is greater than a length of an Orthogonal Frequency Division Multiplexing (OFDM) symbol.

18. A first device, comprising a first processor and a first memory for storing a computer program executable by the processor;
    wherein the first processor is configured to execute steps of the method according to any one of claims 1 to 10 when running the computer program.

19. A second device, comprising a second processor and a second memory for storing a computer program executable by the processor;
    wherein the second processor is configured to execute steps of the method according to any one of claims 11 to 15 when running the computer program.

20. A storage medium having a computer program stored thereon, wherein the computer program, when executed by a processor, is configured to implement steps of the method according to any one of claims 1 to 10, or implement steps of the method according to any one of claims 11 to 15.

Start

Transmit a sensing signal in a flexible slot, an uplink slot, or a downlink slot; where an Extended Cyclic Prefix (ECP) is used in the sensing signal, or a time length of the sensing signal is greater than a length of an Orthogonal Frequency Division Multiplexing (OFDM) symbol — 101

End

**FIG. 1**

| D | D | D | F | U | D | D | D | F | U |
| 0 | 1 | 2 | 3 | 4 | 5 | 6 | 7 | 8 | 9 |

←—— 5ms ——→ ←—— 5ms ——→

Symbol | D D D D D D D D D D F F U U
0                                13

S F

**FIG. 2**

Slot | D | D | D | F | U | D | D | D | F | U |
       0   1   2   3   4   5   6   7   8   9
                                    F F

←—— 5ms ——→ ←—— 5ms ——→

F

Symbol | D D D D D D D D D D F F U U
0                                13

F S

**FIG. 3**

Symbol | S S S S S S C C C C C C C
0                                  12

Symbol | S S C C S S C C S S C C C
0                                  12

**FIG. 4**

Symbol | C | C | C | C | S | S | | C | C | C | C | C | C | C
0                               Guard                      13

**FIG. 5**

```
      ┌─────────┐
      │  Start  │
      └─────────┘
           │
           ▼
┌──────────────────────────────────────────┐
│ Receive a sensing signal in a flexible    │ ─── 601
│ slot, an uplink slot, or a downlink slot; │
│ where an ECP is used in the sensing       │
│ signal, or a time length of the sensing   │
│ signal is greater than a length of an     │
│ OFDM symbol                               │
└──────────────────────────────────────────┘
           │
           ▼
      ┌─────────┐
      │   End   │
      └─────────┘
```

**FIG. 6**

```
┌────────────────────────────────────┐
│   ┌─────────────────────────────┐   │
│   │  First communication        │   │
│   │  unit 701                   │   │
│   └─────────────────────────────┘   │
│                │                     │
│   ┌─────────────────────────────┐   │
│   │  First processing unit      │   │
│   │  702                        │   │
│   └─────────────────────────────┘   │
│                                      │
│     Signal transmitting apparatus    │
└────────────────────────────────────┘
```

**FIG. 7**

23

Second communication
unit 801

Second processing unit
802

Signal receiving apparatus

**FIG. 8**

First device                                                    900

                                                          903

First
processor        902

904

                                    First memory

        First                901
        communication
        interface

**FIG. 9**

Second device                                                  1000

                                                          1003

Second
processor       1002

1004

                                    Second memory

        Second              1001
        communication
        interface

**FIG. 10**

## INTERNATIONAL SEARCH REPORT

| International application No. |
| --- |
| **PCT/CN2024/105140** |

| A. | CLASSIFICATION OF SUBJECT MATTER |
| --- | --- |
| | H04W 72/0446(2023.01)i |

According to International Patent Classification (IPC) or to both national classification and IPC

| B. | FIELDS SEARCHED |
| --- | --- |

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT; CNKI; WPABS; ENTXT; VEN; 3GPP: 灵活, 上行, 下行, 链路, 时隙, 感知, 感测, 信号, 扩展循环前缀, 时间, 长度, 正交频分复用, 符号, flexible, uplink, UL, downlink, DL, link, slot, sense, signal, ECP, Extended Cyclic Prefix, time, length, OFDM, symbol

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111935720 A (NTT DOCOMO, INC.) 13 November 2020 (2020-11-13) description, paragraphs [0058]-[0131] | 1-20 |
| X | US 2023171020 A1 (LENOVO (SINGAPORE) PTE. LTD.) 01 June 2023 (2023-06-01) description, paragraph [0095] | 1-20 |
| A | CN 110583077 A (LG ELECTRONICS INC.) 17 December 2019 (2019-12-17) entire document | 1-20 |
| A | CN 111988848 A (HUAWEI TECHNOLOGIES CO., LTD.) 24 November 2020 (2020-11-24) entire document | 1-20 |
| A | US 2020295892 A1 (SAMSUNG ELECTRONICS CO., LTD.) 17 September 2020 (2020-09-17) entire document | 1-20 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 September 2024** | **20 September 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/105140**

| Patent document cited in search report | | | Publication date (day/month/year) | Patent family member(s) | | | Publication date (day/month/year) |
|---|---|---|---|---|---|---|---|
| CN | 111935720 | A | 13 November 2020 | JPWO | 2016017355 | A1 | 15 June 2017 |
| | | | | JP | 2020025340 | A | 13 February 2020 |
| | | | | JP | 6873214 | B2 | 19 May 2021 |
| | | | | US | 2019150000 | A1 | 16 May 2019 |
| | | | | US | 11218883 | B2 | 04 January 2022 |
| | | | | US | 2017223550 | A1 | 03 August 2017 |
| | | | | WO | 2016017355 | A1 | 04 February 2016 |
| US | 2023171020 | A1 | 01 June 2023 | WO | 2023100116 | A1 | 08 June 2023 |
| | | | | GB | 202409349 | D0 | 14 August 2024 |
| CN | 110583077 | A | 17 December 2019 | US | 2019312665 | A1 | 10 October 2019 |
| | | | | US | 10778368 | B2 | 15 September 2020 |
| | | | | EP | 3574697 | A1 | 04 December 2019 |
| | | | | EP | 3574697 | A4 | 19 February 2020 |
| | | | | EP | 3574697 | B1 | 09 June 2021 |
| | | | | WO | 2019194669 | A1 | 10 October 2019 |
| | | | | JP | 2020518144 | A | 18 June 2020 |
| | | | | JP | 6912592 | B2 | 04 August 2021 |
| | | | | US | 2020382237 | A1 | 03 December 2020 |
| | | | | US | 11451328 | B2 | 20 September 2022 |
| | | | | KR | 20190117501 | A | 16 October 2019 |
| | | | | US | 2022376815 | A1 | 24 November 2022 |
| | | | | US | 11831424 | B2 | 28 November 2023 |
| | | | | KR | 20200060532 | A | 29 May 2020 |
| | | | | KR | 102231273 | B1 | 23 March 2021 |
| CN | 111988848 | A | 24 November 2020 | None | | | |
| US | 2020295892 | A1 | 17 September 2020 | KR | 20170109997 | A | 10 October 2017 |
| | | | | KR | 102458077 | B1 | 25 October 2022 |
| | | | | EP | 3387872 | A2 | 17 October 2018 |
| | | | | EP | 3387872 | A4 | 13 February 2019 |
| | | | | US | 11716728 | B2 | 01 August 2023 |

Form PCT/ISA/210 (patent family annex) (July 2022)

**REFERENCES CITED IN THE DESCRIPTION**

**Patent documents cited in the description**

- CN 202310855848